Europäisches Patentamt

European Patent Office

Office européen des brevets

(19)

(11) Publication number: **0 179 422 B1**

(12) **EUROPEAN PATENT SPECIFICATION**

(45) Date of publication of patent specification: 06.03.91  (51) Int. Cl.⁵: **B60D 1/00**

(21) Application number: 85113304.1

(22) Date of filing: 19.10.85

(54) Trailer coupling.

(30) Priority: 24.10.84 GB 8426829

(43) Date of publication of application:
30.04.86 Bulletin 86/18

(45) Publication of the grant of the patent:
06.03.91 Bulletin 91/10

(84) Designated Contracting States:
DE FR GB IT

(56) References cited:
EP-A- 0 016 317
DE-A- 3 122 116
FR-A- 2 318 752

(73) Proprietor: **LANDINI SpA**
**Via Santo Stefano 71**
**Bologna(IT)**

(72) Inventor: **Villa, Gianfranco**
**Via Amendola 828227**
**Reggiolo (RE) 20(IT)**

(74) Representative: **Morrall, Roger et al**
**Massey-Ferguson Patent Department**
**Stareton near Kenilworth Warwickshire CV8**
**2LJ(GB)**

EP 0 179 422 B1

Rank Xerox (UK) Business Services

## Description

### Technical Field

This invention relates to trailer coupling installations on vehicles such as agricultural or industrial tractors and in particular to such installations which allow the height of the coupling to be adjusted.

Various adjustable height trailer couplings have been proposed in the past, see for example EP-A-0016317 discussed in detail below, but these constructions have either been of a relatively complex and thus expensive construction or have not been convenient to operate.

### Disclosure of Prior Art

EP-A-0016317 discloses an adjustable height trailer coupling installation for a vehicle, such as a tractor. The coupling comprises a support structure in which are formed a pair of channels which extends substantially the entire length of the support structure and a support member which is vertically slidable in the channels relative to the support structure. Two sets of inter-engaging locking formations are provided on the support member and support structure respectively which when engaged act to lock the support member relative to the support structure in any one of a number of positions and when disengaged to allow the support structure to slide vertically relative to the support member.

One of the problems associated with the above mentioned coupling resides in the fact that each of the channels and the support member must be accurately machined if the support member is to slide vertically within the channels without jamming. Accurate machining of the internal surfaces of channel shaped formations, particularly over long lengths, is often difficult and expensive to achieve and introduces undesirable complexity in to the manufacture of the coupling.

### Disclosure of the Invention

It is an object of the present invention to provide an improved form of adjustable height trailer coupling which mitigates the above mentioned problem.

Thus according to the present invention to provide an adjustable height trailer coupling installation for a vehicle such as an agricultural tractor, the installation comprising a support structure for attachment to the vehicle, a coupling secured to a support member, said coupling and support member being vertically slidable relative to the support structure, two locking formations on the support member engageable under the action of bias means with co-operating locking formations on the support structure to lock the support member and coupling in a selected vertical position relative to the support structure, and an operating member interconnecting the two locking formations on the support member for simultaneous movement of said two locking formations out of engagement with the locking formations on the support structure to allow the coupling and support member to move vertically relative to the support structure, the installation being characterised in that the support member is mounted on the support strucutre for vertical sliding by a pair of channels formed on the support member, each channel receiving a respective vertical support plate which forms part of the support structure and each locking formation on the support member being movable across a respective channel by the operating member to engage locking formations formed in the respective support plate within the channel to lock the support member relative to the support structure.

As will be appreciated, the above trailer coupling installation is easy to operate since in order to adjust the vertical position of the support member it is simply necessary to move the operating member which simultaneously disengages both sets of inter-engaging locking formations and allows the support member and coupling to be moved to another vertical position. Also, the coupling installation is of a relatively simple and thus inexpensive construction since it is only necessary to machine the relatively short channels on the support member.

In a preferred arrangement each movable locking formation comprises a locking pin which is slidable in a respective bore in the support member between its engaged position in which it engages the respective support plate and a disengaged position in which the respective support plate is not engaged, each pin being connected with one end portion of each respective pivotted arm, the other end portion of each respective arm being pivotted on the support member, and said one end portions of the arms being interconnected by the operated member in the form of a handle.

Conveniently, bias means in the form of springs act between each arm and the support member to bias the arms towards the support member thus biasing the locking pins towards their engaged positions.

### Description of the Drawings

One embodiment of the present invention will now be described, by way of example only, with reference to the accompanying drawings in which:-

Figure 1 is a perspective view of an adjustable height trailer coupling installation for use on an agricultural tractor with the towing hook removed for clarity;

Figure 2 is a side view of the upper part of the coupling installation;

Figure 3 is a rear view of the upper part of the installation with the towing hook omitted for clarity, and

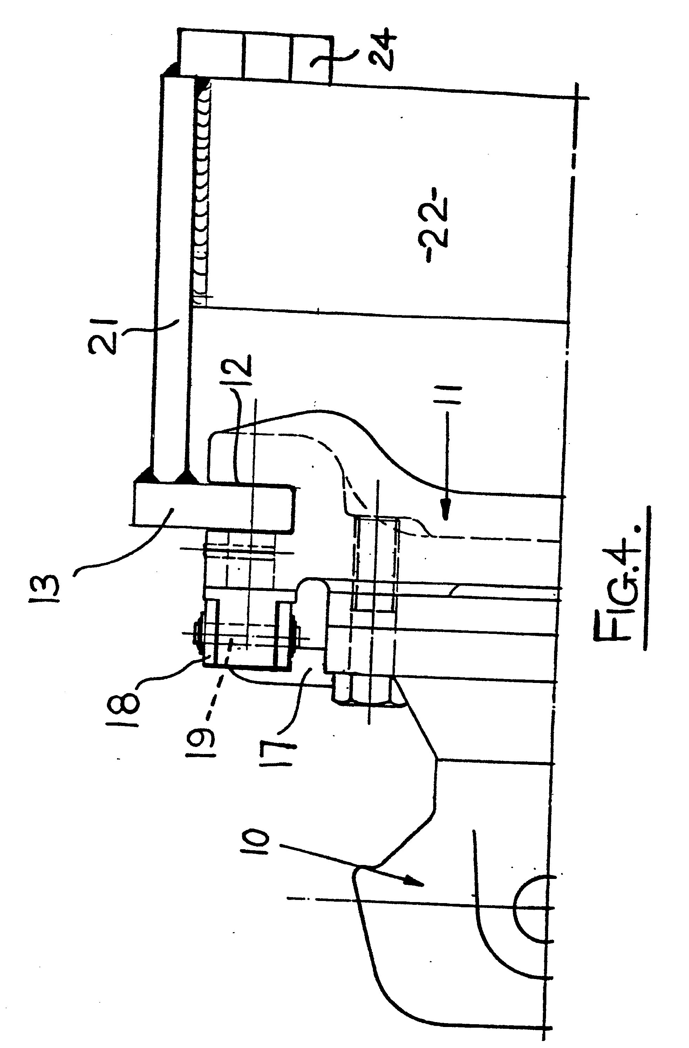

Figure 4 is a plan view of half of the installation.

## Best Mode of Carrying Out Invention

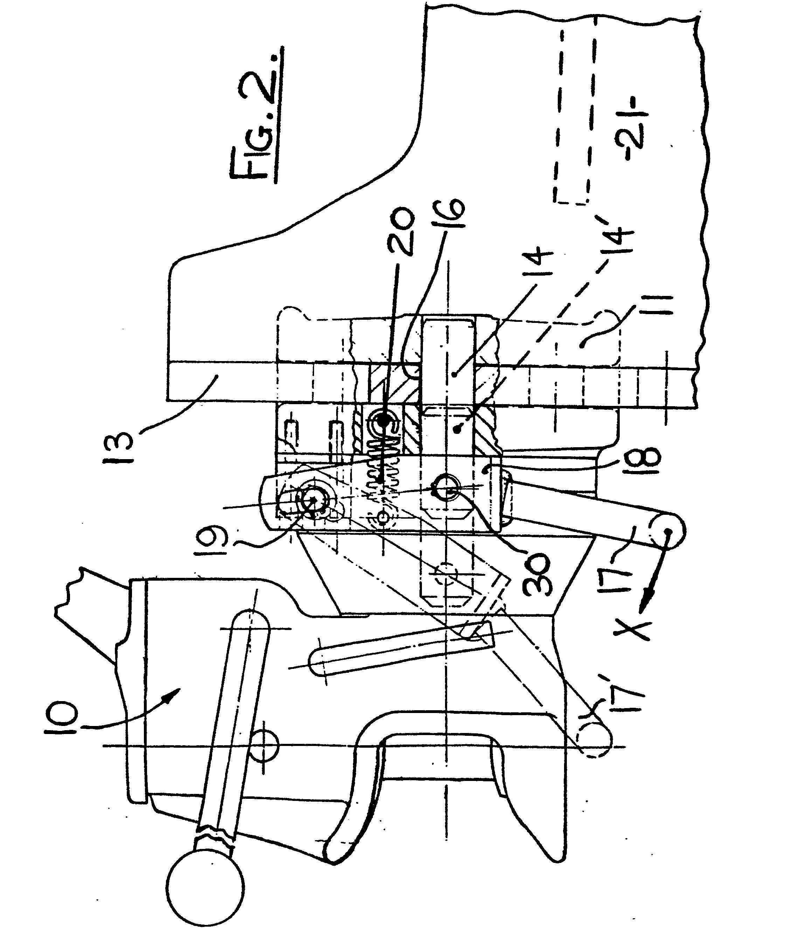

The trailer coupling installation basically comprises a coupling in the form of a towing hook 10 which is mounted on a support member in the form of a saddle member 11 which includes channels 12 which receive vertical support plates 13 which form part of a saddle support structure. The saddle member 11 is vertically slidable up and down the support plates 13 and can be locked in as number of different height positions using locking pins 14 which extend through holes 15 in the saddle member 11 and are also engageable in an appropriate hole 16 in the support plates 13 (See Figure 2).

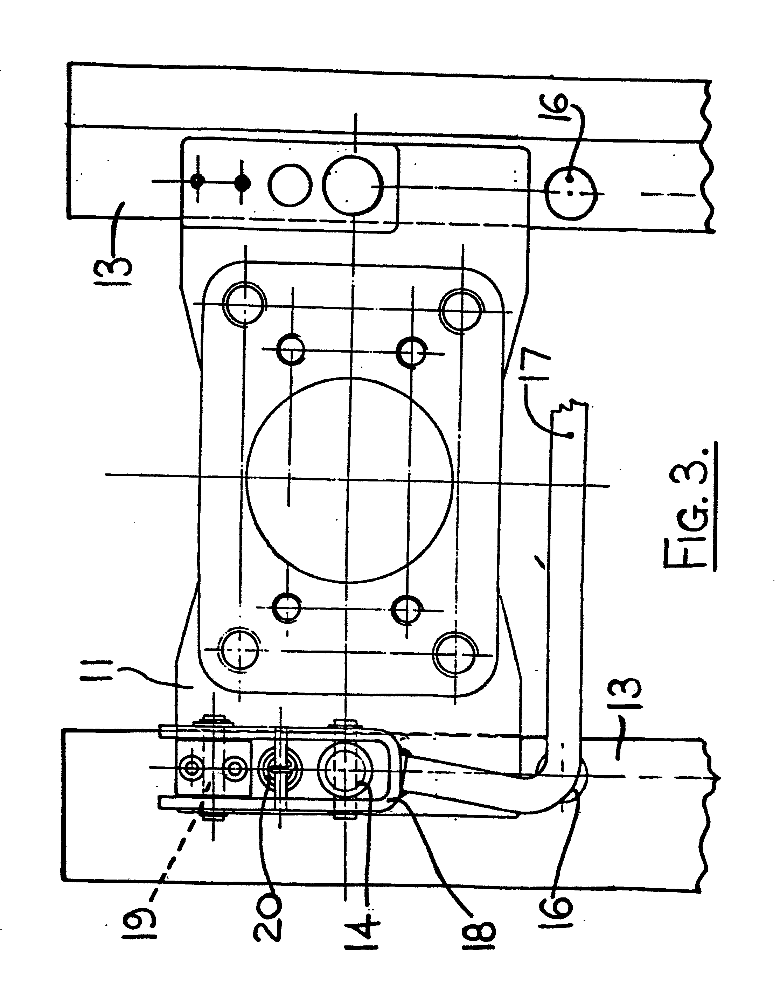

As best seen in Figures 2 and 3 each of the locking pins 14 is pivotally connected at 30 with one end portion of an arm 18 the other end of which is pivotally mounted at 19 on the sable member 11. A spring 20 acts between each arm 18 and the saddle 11 to bias the arms towards the saddle and thus to bias each locking pin 14 towards its engaged position shown in full lines in Figure 2.

The arms 18 are interconnected by an operating member in the form of a handle 17. The handle 17 can be moved from the full line position shown in Figure 2 in which the locking pins 14 engage the appropriate hole 16 in the support plates 13 to the disengaged postion shown at 17' in Figure 2 in which the locking pins have disengaged the holes 16 as shown in 14'.

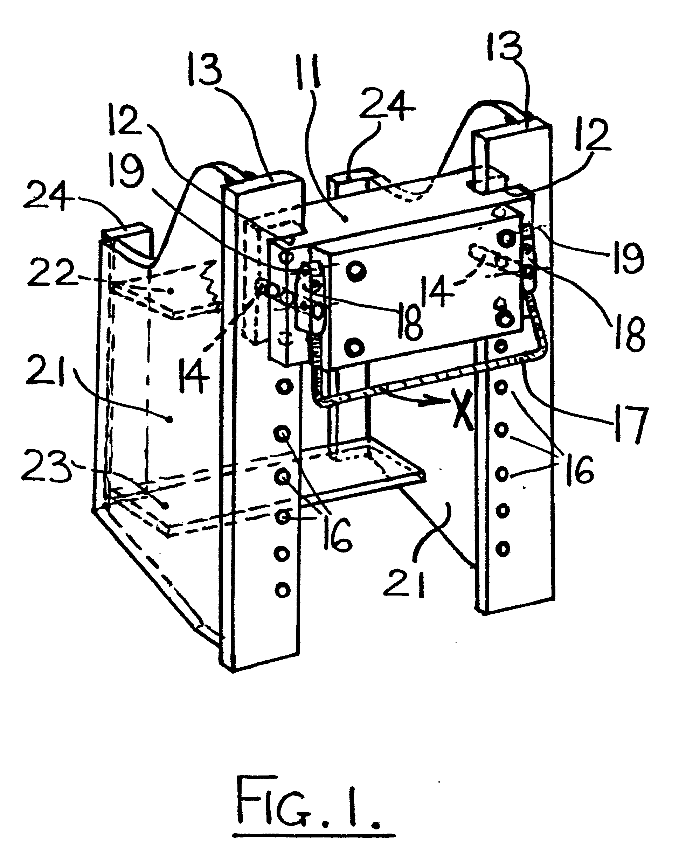

As will be appreciated, in order to adjust the vertical height of the saddle 11 relative to the support plates 13 the pins 14 are disengaged from the holes 16 in support plate 13 by pulling the handle 17 in the direction of arrow X shown in Figures 1 and 2. This causes the arms 18 to pivot about their pivotal mounts 19 against the action of springs 20 thus withdrawing the pins 14 from the holes 16 and allowing the vertical height of the saddle member and thus the towing hook 10 to be adjusted.

Once the pins 14 have disengaged the holes 16, and the saddle 11 has moved slightly so that the pins 14 are no longer aligned with a set of holes 16, the handle 17 can be released and will then automatically snap into the next available set of holes in the support plates 13 as the saddle member 11 is slid vertically. This is a particularly convenient feature of the installation of the present invention when making small adjustments in the vertical height of the towing hook since it is not necessary for the operator to maintain the handle 17 in its disengaged position 17' during the entire procedure.

As indicated above the support plates 13 form part of a support structure which is bolted to the rear of the tractor. The precise details of the support structure employed depend on the constructional details of the tractor to which the installation is to be fitted. In the embodiment illustrated the support plates 13 are carried by side plates 21 which are connected by transversely extending plates 22 and 23 which also carry securing flanges 24 by which the side plates 21 are bolted to the rear of a tractor.

As will be appreciated from the above, the present invention thus provides an adjustable height trailer coupling which is of a relatively simple and inexpensive construction which is also easy to operate.

## Claims

1. An ajustable height trailer coupling installation for a vehicle such as an agricultural tractor, the installation comprising a support structure (13, 21, 23) for attachment to the vehicle, a coupling (10) secured to a support member (11), said coupling and support member being vertically slidable relative to the support structure, two locking formations (14) on the support member enagageable under the action of bias means (20) with co-operating locking formations on the support structure to lock the support member and coupling in a selected vertical position relative to the support structure, and an operating member (17) interconnecting the two locking formations (14) on the support member for simultaneous movement of said two locking formations out of engagement with the locking formations (16) on the support structure to allow the coupling and support member to move vertically relative to the support structure, the installation being characterised in that the support member (11) is mounted on the support structure (13) for vertical sliding by a pair of channels (12) formed on the support member, each channel receiving a respective vertical support plate (13) which forms part of the support struture and each locking formation (14) on the support member (11) being movable across a respective channel (12) by the operating member (17) to engage locking formations (16) formed in the respective support plate (13) within the channel to lock the support member relative to the support structure.

2. A coupling installation according to claim 1 in which each locking formation comprises a locking pin (14) which is slidable in a respective bore (15) in the support member (11) between its engaged position in which it engages the respective support plate (13) and a disengaged position in which the respective support plate is not engaged , each pin being connected with one end portion of a respective pivotted arm (18), the other end portion of each respective arm being pivotted (19) on the support member, and said one end portions of the arms being interconnected by the operating member in the form of a handle (17).

3. A coupling installation according to claim 2 in which the bias means comprises springs (20) acting between each arm (18) and the support member (11) to bias the arms towards the support member thus biasing the locking pins towards their engaged positions.

**Revendications**

1. Dispositif d'attelage de remorque réglable en hauteur pour un véhicule tel qu'un tracteur agricole, le dispositif comprenant une structure porteuse (13,21,23) pour fixation au véhicule, un coupleur (10) fixé à un support (11), ledit coupleur et ledit support pouvant coulisser verticalement par rapport à la structure porteuse, deux éléments de verrouillage (14) prévus sur le support et pouvant venir en prise sous l'action de moyens de rappel (20) avec des éléments de verrouillage associés prévus sur la structure porteuse de manière à bloquer le support et le coupleur dans une position verticale choisie par rapport à la structure porteuse, et un organe de manoeuvre (17) interconnectant les deux éléments de verrouillage (14) sur le support pour dégager simultanément lesdits deux éléments de verrouillage des éléments de verrouillage (16) prévus sur la structure porteuse afin de permettre au coupleur et au support de se déplacer verticalement par rapport à la structure porteuse, le dispositif étant caractérisé en ce que le support (11) est monté sur la structure porteuse (13) pour un mouvement coulissant vertical par l'intermédiaire de deux rainures (12) formées sur le support, chaque rainure recevant une plaque porteuse respective (13) qui fait partie de la structure porteuse, et chaque élément de verrouillage (14) sur le support (11) étant déplaçable en travers d'une rainure respective (12) au moyen de l'organe de manoeuvre (17) pour venir en prise avec les éléments de verrouillage (16) prévus dans la plaque porteuse respective (13) à l'intérieur de la rainure, de manière à bloquer le support par rapport à la structure porteuse.

2. Dispositif d'attelage suivant la revendi tion 1, dans lequel chaque élément de verrouillage comprend une broche de verrouillage (14) qui peut coulisser dans un trou respectif (15) du support (11) entre sa position d'enclenchement, dans laquelle elle est en prise avec la plaque porteuse respective (13), et une position de dégagement dans laquelle la plaque porteuse respective n'est pas en prise, chaque broche étant reliée à une première partie d'extrémité d'un bras pivotant respectif (18), l'autre partie d'extrémité de chaque bras respectif étant fixée de façon pivotante (19) sur le support, et lesdites premières parties d'extrémité des bras étant interconnectées par l'organe de manoeuvre sous la forme d'une poignée (17).

3. Dispositif d'attelage suivant la revendication 2, dans lequel les moyens de rappel comprennent des ressorts (20) agissant entre chaque bras (18) et le support (11) de manière à rappeler les bras vers le support, poussant ainsi les broches de verrouillage vers leurs positions d'enclenchement.

**Ansprüche**

1. Höhenverstellbare Anhänger-Kupplungsanordnung für Fahrzeuge, beispielsweise Ackerschlepper, mit einer am Fahrzeug anbaubaren Haltevorrichtung (13, 21, 23), einer an einem Träger (11) befestigten Kupplung (10), wobei Kupplung und Träger relativ zur Haltevorrichtung senkrecht verschiebbar sind, zwei am Träger angeordneten Verriegelungen (14), welche durch die Wirkung einer Einrichtung (20) zum Ausüben einer Vorspannung mit zugeordneten Rasteinrichtungen an der Haltevorrichtung zum Verriegeln von Träger und Kupplung in einer zur Haltevorrichtung vertikalen Stellung in Eingriff bringbar sind, und einer die beiden Verriegelungen (14) am Träger miteinander verbindenden Betätigungseinrichtung (17) zum gleichzeitigen Ausrücken beider Verriegelungen aus den Rasteinrichtungen (16) an der Haltevorrichtung, wodurch Kupplung und Träger relativ zur Haltevorrichtung senkrecht verschiebbar sind, dadurch gekennzeichnet, dass der Träger (11) durch ein Paar in ihm vorgesehenen Nuten (12) senkrecht verschiebbar an der Haltevorrichtung (13) angeordnet ist, wobei jede Nut jeweils eine einen Teil der Haltevorrichtung bildende senkrechte Stützschiene (13) aufnimmt und jede Verriegelung (14) am Träger (11) von der Betätigungseinrichtung (17) entlang der zugeordneten Nut (12) bewegbar und in die in der zugehörigen Stützschiene (13) im Bereich der Nuten ausgebildeten Rasteinrichtungen (16) zum Verriegeln des Trägers relativ zur Haltevorrichtung einrastbar ist.

2. Kupplungsvorrichtung nach Anspruch 1, dadurch gekennzeichnet, dass jede Verriegelung einen Sperrbolzen (14) aufweist, welcher in einer jeweiligen Bohrung (15) im Träger (11) zwischen seiner eingerasteten Stellung, in der er mit der zugehörigen Stützschiene (13) in Eingriff steht, und einer ausgerückten Stellung, in der er nicht in die Stützschiene eingreift, verschiebbar ist, wobei jeder Sperrbolzen jeweils mit einem Ende eines Schwenkarmes (18) verbunden ist, dessen anderes Ende drehbar (19) am Träger gelagert ist und die erstgenannten Enden der Schwenkarme durch die Betätigungseinrichtung in Form eines Handgriffs (17) miteinander verbunden sind.

3. Kupplungsvorrichtung nach Anspruch 2, dadurch gekennzeichnet, dass die Einrichtung zum Ausüben einer Vorspannung Federn (20) aufweist, welche zwischen jedem Schwenkarm (18) und dem Träger (11) wirken und die Schwenkarme zum Träger und damit die Sperrbolzen zu ihren eingerasteten Stellungen hin vorspannen.

# FIG. 1.

FIG. 2.

Fig. 3.

FIG.4.